# EUROPEAN PATENT APPLICATION

(11) **EP 4 693 523 A1**
(43) Date of publication of application: **11.02.2026**
(21) Application number: 24784057.2
(22) Date of filing: 18.03.2024
(51) Int. Cl.: H01M 4/66, H01M 4/02, H01M 50/593, H01M 50/586, H01M 50/54

(54) **BATTERY CELL AND ELECTRICAL DEVICE**

(30) Priority: 07.04.2023 CN 202310365701
(71) Applicant: Ningde Amperex Technology Limited, Ningde, Fujian 352100 (CN)
(72) Inventor: WU, Biao, Ningde, Fujian 352100 (CN); LV, Fang, Ningde, Fujian 352100 (CN); LIU, Zhaozhao, Ningde, Fujian 352100 (CN)
(74) Representative: Kraus & Lederer PartGmbB
(86) International application number: PCT/CN2024/082276
(87) International publication number: WO 2024/207972

(57) **Abstract**

This application provides a battery cell and an electric device. The battery cell includes a housing, an electrode assembly, a conductive member, and a protective layer. The electrode assembly is accommodated in the housing. The electrode assembly includes a first electrode plate and a second electrode plate with opposite polarities. The first electrode plate includes a first current collector and a first active substance layer. The first current collector includes a main body portion and a first region located in a width direction of the first electrode plate, the first active substance layer being provided on a surface of the main body portion and the first active substance layer being not provided on a surface of the first region. The conductive member is welded to the first region to form a welding region. The protective layer is disposed on a surface of the welding region. The protective layer can cover burrs, shavings, and the like in the welding region to reduce the risk of short circuit inside the battery cell caused by the burrs, shavings, and the like in the welding region piercing a separator of the electrode assembly, thereby improving safety performance of the battery cell.

## Description

### CROSS-REFERENCE TO RELATED APPLICATIONS

This application claims priority to Chinese Patent Application No. CN202310365701.4, filed on April 07, 2023 and entitled "BATTERY CELL AND ELECTRIC DEVICE", which is incorporated herein by reference in its entirety.

### TECHNICAL FIELD

This application relates to the field of battery technologies, and specifically, to a battery cell and an electric device.

### BACKGROUND

Batteries have been widely used in fields such as portable electronic devices, electric transportation tools, electric tools, unmanned aerial vehicles, and energy storage devices. As application environments and conditions become increasingly complex, higher requirements are imposed on safety performance of battery cells.

### SUMMARY

Some embodiments of this application provide a battery cell and an electric device, so as to improve safety performance of the battery cell.

According to a first aspect, an embodiment of this application provides a battery cell including a housing, an electrode assembly, a conductive member, and a protective layer. The electrode assembly is accommodated in the housing. The electrode assembly includes a first electrode plate and a second electrode plate with opposite polarities. The first electrode plate includes a first current collector and a first active substance layer. The first current collector includes a first conductive layer, an insulation layer, and a second conductive layer, where the first current collector includes a main body portion and a first region located in a width direction of the first electrode plate, the first active substance layer being provided on a surface of the main body portion and the first active substance layer being not provided on a surface of the first region. The conductive member is disposed on both the first conductive layer and the second conductive layer, and is welded to the first region to form a welding region for mutual conductive connection. The conductive connection means that the first conductive layer is conductively connected to the second conductive layer through the conductive member. The battery cell further includes the protective layer, where the protective layer is disposed on a surface of the welding region.

In the foregoing technical solution, the first current collector includes the first conductive layer, the insulation layer, and the second conductive layer, meaning that the first current collector is a composite current collector, which is conducive to enhancing strength of the first current collector and decreasing weight of the first current collector. With the protective layer disposed on the surface of the welding region, the protective layer can cover burrs, shavings, and the like in the welding region to reduce the risk of short circuit inside the battery cell caused by the burrs, shavings, and the like in the welding region piercing a separator of the electrode assembly, thereby improving safety performance of the battery cell.

In some embodiments of the first aspect of this application, the protective layer is an insulation adhesive layer.

In the foregoing technical solution, the protective layer is made of an insulation material, which not only can reduce the risk of short circuit inside the battery cell caused by the burrs, shavings, and the like in the welding region piercing the separator of the electrode assembly, but also can insulate and isolate the first electrode plate from the second electrode plate, further reducing the risk of short circuit inside the battery cell, thereby improving the safety performance of the battery cell.

In the foregoing technical solution, the protective layer is an adhesive layer, so that the protective layer can be provided on the surface of the welding region through adhesion or coating. The provision manner is simple and convenient.

In some embodiments of the first aspect of this application, the adhesive layer is made of one or more of acrylic acid, hot-melt adhesive, rubber, polypropylene, polyethylene terephthalate, polyimide, and fiber ester metal-based adhesive film.

In the foregoing technical solution, materials such as acrylic acid, hot-melt adhesive, rubber, polypropylene, polyethylene terephthalate, polyimide, and fiber ester metal-based adhesive film enable the adhesive layer to have good adhesion, allowing it to be stably adhered to the welding region.

In some embodiments of the first aspect of this application, in the width direction of the first electrode plate, size of the protective layer is M₁, where 0.5 mm ≤ M₁ ≤ 6 mm.

In the foregoing technical solution, if M₁ < 5 mm, a coverage area is small, and the risk of the burrs, shavings, and the like in the welding region piercing the separator is large. If M₁ > 5 mm, the protective layer has an excessively large size and occupies a large space, which may decrease energy density of the battery cell. Therefore, when 0.5 mm ≤ M₁ ≤ 6 mm, it not only can allow the protective layer to cover a large area of the welding region as much as possible, reducing the risk of the burrs, shavings, and the like in the welding region piercing the separator, but also can reduce the influence of the protective layer on the energy density of the battery cell.

In some embodiments of the first aspect of this application, observed along a thickness direction of the first electrode plate, size of a portion of the protective layer overlapping with the welding region in the thickness direction of the first electrode plate is M₂, where 3 µm ≤ M₂ ≤ 60 µm.

In the foregoing technical solution, if M₂ < 3 µm, the protective layer has a small thickness, and the protective layer is at a high risk of being pierced by the burrs, shavings, and the like in the welding region. If M₂ > 60 µm, the protective layer has an excessively large thickness and occupies a large space, which may decrease the energy density of the battery cell. Therefore, when 3 µm ≤ M₂ ≤ 60 µm, the protective layer has a large size in the thickness direction of the first electrode plate and is less likely to be pierced by the burrs, shavings, and the like in the welding region, thereby reducing the risk of the burrs, shavings, and the like in the welding region piercing the separator, and reducing the influence of the protective layer on the energy density of the battery cell.

In some embodiments of the first aspect of this application, in the width direction of the first electrode plate, size of the welding region is M₃, where 1.8 mm ≤ M₃ ≤ 2.3 mm.

In the foregoing technical solution, if M₃ < 1.8 mm, the welding region is small, and welding strength between the conductive member and the first region is insufficient. If M₃ > 2.3 mm, the welding region is large, which increases welding difficulty and may reduce quality of the first electrode plate. Therefore, when 1.8 mm ≤ M₃ ≤ 2.3 mm, a good welding strength is implemented between the first region and the conductive member, and the risk of reducing quality of the first electrode plate due to welding can be reduced.

In some embodiments of the first aspect of this application, in a thickness direction of the first electrode plate, size of the welding region is M₄, where 40 µm ≤ M₄ ≤ 45 µm.

In the foregoing technical solution, if M₄ < 40 µm, the welding region is small, and welding strength between the conductive member and the first region is insufficient. If M₄ > 45 µm, the welding region is large, which increases welding difficulty and may reduce quality of the first electrode plate. Therefore, when 40 µm ≤ M₄ ≤ 45 µm, a good welding strength is implemented between the first region and the conductive member, and the risk of reducing quality of the first electrode plate due to welding can be reduced.

In some embodiments of the first aspect of this application, in the width direction of the first electrode plate, an end of the first active substance layer is in contact with an end of the protective layer.

In the foregoing technical solution, with the end of the first active substance layer in the width direction of the first electrode plate in contact with the end of the protective layer in the width direction of the first electrode plate, the protective layer can cover the burrs, shavings, and the like in the welding region as many as possible to further reduce the risk of short circuit inside the battery cell caused by the burrs, shavings, and the like in the welding region piercing the separator of the electrode assembly.

In some embodiments of the first aspect of this application, in the width direction of the first electrode plate, a gap is formed between an end of the first active substance layer and an end of the conductive member.

In the foregoing technical solution, the gap being formed between the end of the first active substance layer in the width direction of the first electrode plate and the end of the conductive member in the width direction of the first electrode plate not only facilitates mounting of the conductive member, but also reduces the risk of damage to the first active substance layer during mounting of the conductive member.

In some embodiments of the first aspect of this application, the protective layer is disposed on a side of the first region in a thickness direction of the first electrode plate, and in the thickness direction of the first electrode plate, a surface of the protective layer back away from the first region does not protrude from a surface of the first active substance layer back away from the main body portion.

In the foregoing technical solution, in the thickness direction of the first electrode plate, with the surface of the protective layer back away from the first region not protruding from the surface of the first active substance layer back away from the main body portion, the protective layer can utilize a space formed by a thickness difference between the first active substance layer and the first region in the thickness direction of the first electrode plate, without occupying additional space, avoiding decreasing the energy density of the battery cell due to the protective layer occupying a large space in the thickness direction of the first electrode plate.

In some embodiments of the first aspect of this application, the first electrode plate is a positive electrode plate, and the second electrode plate is a negative electrode plate. The second electrode plate includes a second current collector and a second active substance layer, the second active substance layer is disposed on a surface of the second current collector, and observed along a thickness direction of the first electrode plate, the welding region and the second active substance layer have an overlapping region.

In the foregoing technical solution, observed along the thickness direction of the first electrode plate, the welding region and the second active substance layer have an overlapping region, so that the welding region can overlap with the active body region of the electrode assembly, which can reduce size of the battery cell in the width direction of the first electrode plate, thereby increasing the volumetric energy density of the battery cell. Alternatively, the first active substance layer of the first electrode plate and the second active substance layer of the second electrode plate both extend toward the welding region, and the second active substance layer extends to overlap with the welding region, increasing the amount of active substance of the electrode assembly, thereby helping to increase the energy density of the battery cell.

In some embodiments of the first aspect of this application, in the width direction of the first electrode plate, the second active substance layer has a first edge; and observed along the thickness direction of the first electrode plate, the first edge falls within the welding region.

In the foregoing technical solution, observed along the thickness direction of the first electrode plate, the first edge falls within the welding region, so that the second active substance layer can cover the entire first active substance layer corresponding to the second active substance layer, thereby reducing the risk of lithium precipitation. In addition, this can reduce use amount of the second active substance layer as much as possible, and is conducive to reducing the material consumption and avoiding material waste, as compared to the case that the second active substance layer covers the entire first active substance layer in the width direction of the first electrode plate and when observed along the thickness direction of the first electrode plate, the first edge is flush with an edge of the welding region far away from the first active substance layer or the first edge is located on a side, far away from the first active substance layer, of the edge of the welding region far away from the first active substance layer.

In some embodiments of the first aspect of this application, the first current collector includes a first conductive layer, an insulation layer, and a second conductive layer, and in a thickness direction of the first electrode plate, the insulation layer is located between the first conductive layer and the second conductive layer. The conductive member includes a first conductive sub-member and a second conductive sub-member, where the first conductive sub-member is welded to the first conductive layer, and the second conductive sub-member is welded to the second conductive layer.

The first conductive sub-member being welded to the first conductive layer and the second conductive sub-member being welded to the second conductive layer is conducive to implementing electrical connection between the first conductive layer and the second conductive layer, thereby improving current flow capacity.

In some embodiments of the first aspect of this application, the battery cell further includes a housing, the electrode assembly being accommodated in the housing; and length of the first conductive sub-member is greater than length of the second conductive sub-member, and the battery cell further includes a first electrode lead, the first electrode lead having one end connected to the first conductive sub-member and the other end extending out of the housing.

In the foregoing technical solution, the first conductive sub-member being connected to the first electrode lead has smaller connection difficulty, as compared to both the first conductive sub-member and the second conductive sub-member being connected to the first electrode lead.

In some embodiments of the first aspect of this application, the first conductive sub-member includes a first segment, a second segment, and a third segment connected in sequence, where the first segment is welded to the first conductive layer, the third segment is connected to the first electrode lead, the third segment is bent relative to the second segment to form a bent portion between the second segment and the third segment, and the second conductive sub-member overlaps with the first segment and does not overlap with the bent portion.

In the foregoing technical solution, the second conductive sub-member overlaps with the first segment and does not overlap with the bent portion, so that the second conductive sub-member is not bent at a position corresponding to the bent portion. This reduces bending difficulty of the first conductive sub-member and allows it to be bent to a great extent, thereby reducing the size of the battery cell in the width direction of the first electrode plate and helping to increase the energy density of the battery cell.

In some embodiments of the first aspect of this application, in the width direction of the first electrode plate, size of the second conductive sub-member is M₅, where 3 mm ≤ M₅ ≤ 4.5 mm.

In the foregoing technical solution, if M₅ < 3 mm, the second conductive sub-member has a small size and weak current flow capacity. If M₅ > 4.5 mm, the second conductive sub-member has an excessively large size and occupies a large space, decreasing the energy density of the battery cell. Therefore, when 3 mm ≤ M₅ ≤ 4.5 mm, the second conductive sub-member has good current flow capacity, and the influence of the second conductive sub-member on the energy density of the battery cell can be reduced.

In some embodiments of the first aspect of this application, in the thickness direction of the first electrode plate, size of the second conductive sub-member is M₆, where 8 µm ≤ M₆ ≤ 20 µm.

In the foregoing technical solution, if M₆ < 8 µm, the second conductive sub-member has a small size and weak current flow capacity. If M₆ > 20 µm, the second conductive sub-member has an excessively large size and occupies a large space, decreasing the energy density of the battery cell. Therefore, when 8 µm ≤ M₆ ≤ 20 µm, the second conductive sub-member has good current flow capacity, and the influence of the second conductive sub-member on the energy density of the battery cell can be reduced.

In some embodiments of the first aspect of this application, the battery cell is a pouch battery cell, and the housing is a packaging bag.

In the foregoing technical solution, the pouch battery cell has advantages such as good safety performance, light weight, and low internal resistance, reducing self-consumption of the battery cell.

According to a second aspect, an embodiment of this application provides an electric device including the battery cell according to any one of the embodiments of the first aspect.

### BRIEF DESCRIPTION OF DRAWINGS

To describe the technical solutions in some embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a battery cell according to some embodiments of this application;
FIG. 2 is a schematic diagram of a first electrode plate, a conductive member, and a protective layer being combined according to some embodiments of this application;
FIG. 3 is a schematic structural diagram of a first electrode plate according to some embodiments of this application;
FIG. 4 is a schematic diagram of a first electrode plate, a conductive member, and a protective layer being combined according to some other embodiments of this application;
FIG. 5 is a schematic diagram of a first electrode plate, a conductive member, and a protective layer being combined according to still some other embodiments of this application;
FIG. 6 is a schematic diagram of a first electrode plate, a conductive member, and a protective layer being combined according to yet some other embodiments of this application;
FIG. 7 is a partial schematic diagram of a structure of a battery cell according to some other embodiments of this application;
FIG. 8 is a partial schematic diagram of a structure of a battery cell according to some other embodiments of this application;
FIG. 9 is a comparison diagram of the embodiments in FIG. 7 and the embodiments in FIG. 8;
FIG. 10 is a partial schematic diagram of a structure of a battery cell according to still some other embodiments of this application;
FIG. 11 is a comparison diagram of the embodiments in FIG. 7, the embodiments in FIG. 8, and the embodiments in FIG. 10;
FIG. 12 is a partial schematic diagram of a structure of a battery cell according to yet some other embodiments of this application;
FIG. 13 is a comparison diagram of the embodiments in FIG. 7 and the embodiments in FIG. 12; and
FIG. 14 shows the battery cell (with a first segment, second segment, third segment, and bent portion of a first conductive sub-member marked) in FIG. 1.

The accompanying drawings are not drawn to scale.

Reference signs: 100. battery cell; 10. housing; 11. first accommodating space; 12. second accommodating space; 20. electrode assembly; 20a. active body; 21. first electrode plate; 211. first current collector; 2111. main body portion; 2112. first region; 2113. first conductive layer; 2114. insulation layer; 2115. second conductive layer; 2116. first uncoated region; 212. first active substance layer; 2121. first end; 22. second electrode plate; 221. second current collector; 2211. body portion; 2212. second region; 222. second active substance layer; 2221. first edge; 23. separator; 30. conductive member; 31. first conductive sub-member; 311. first segment; 312. second segment; 313. third segment; 314. bent portion; 32. second conductive sub-member; 33. fourth end; 40. protective layer; 41. second end; 42. third end; 50. first electrode lead; 60. protective member; A. welding region; B1. spacing; B2. gap; B21. first gap; B22. second gap; X. width direction of first electrode plate; and Y. thickness direction of first electrode plate.

### DESCRIPTION OF EMBODIMENTS

To make the objectives, technical solutions, and advantages in some embodiments of this application clearer, the following clearly and completely describes the technical solutions in some embodiments of this application with reference to the accompanying drawings in some embodiments of this application. Apparently, the described embodiments are some but not all of the embodiments of this application. Generally, the components in some embodiments of this application as described and illustrated in the accompanying drawings herein can be arranged and designed in a variety of configurations.

Therefore, the following detailed description of some embodiments of this application as provided in the accompanying drawings is not intended to limit the protection scope of this application but merely to represent selected embodiments of this application. All other embodiments obtained by persons of ordinary skill in the art based on some embodiments of this application without creative efforts shall fall within the protection scope of this application.

It should be noted that in absence of conflicts, some embodiments and features in some embodiments in this application may be combined with each other.

It should be noted that similar reference numerals and letters indicate similar items in the following drawings, and therefore once an item is defined in one drawing, it does not need to be further defined or explained in the subsequent drawings.

In the description of some embodiments of this application, it should be noted that the orientations or positional relationships as indicated are orientations or positional relationships based on the accompanying drawings, or conventional orientations or positional relationships of products of this application in use, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore shall not be construed as any limitations on this application. In addition, the terms "first", "second", "third", and the like are merely intended for distinguishing purposes and shall not be understood as any indication or implication of relative importance.

Currently, from the perspective of market development, battery cells have been increasingly widely used. Battery cells have been widely used in many fields such as electric transportation tools including electric bicycles, electric motorcycles, and electric vehicles, electric tools, unmanned aerial vehicles, and energy storage devices. With continuous expansion of application fields of battery cells, market demands for battery cells are also increasing.

For the development of battery cells, many factors need to be considered, for example, performance parameters such as energy density, cycle life, discharge capacity, and charge and discharge rate, as well as safety performance of battery cells. Short circuit inside a battery cell is one of the important causes of battery cell safety problems. The short circuit inside the battery cell causes internal temperature of the battery cell to rise sharply, and may even cause fire, explosion, and the like.

The battery cell includes a housing and an electrode assembly, the electrode assembly includes a first electrode plate and a second electrode plate with opposite polarities, and a current collector of at least one of the first electrode plate or the second electrode plate is welded to a conductive member to lead out an electrode of the electrode assembly. However, there are burrs, shavings, and the like in a welding region of the current collector and the conductive member, which easily pierce a separator of the electrode assembly, causing the first electrode plate and the second electrode plate to be short-circuited and further leading to short circuit inside the battery cell, severely degrading safety performance of the battery cell.

In view of this, some embodiments of this application provide a battery cell. The battery cell further includes a protective layer, where the protective layer is disposed on a surface of the welding region. With the protective layer disposed on the surface of the welding region, the protective layer can cover the burrs, shavings, and the like in the welding region to reduce the risk of short circuit inside the battery cell caused by the burrs, shavings, and the like in the welding region piercing the separator of the electrode assembly, thereby improving the safety performance of the battery cell.

The battery cell disclosed in these embodiments of this application may be used without limitation in an electric device such as an electric two-wheeler, an electric tool, an unmanned aerial vehicle, or an energy storage device. A battery cell with working conditions of this application may alternatively be used as a power supply system of the electric device. This is conducive to improving the safety performance of the battery cell and electrical safety of the electric device.

An embodiment of this application provides an electric device that uses a battery cell as a power source. The electric device may be but is not limited to an electronic device, an electric tool, an electric transportation tool, an unmanned aerial vehicle, or an energy storage device. The electronic device may include a mobile phone, a tablet computer, a notebook computer, or the like, the electric tool may include an electric drill, an electric saw, or the like, and the electric transportation tool may include an electric vehicle, an electric motorcycle, an electric bicycle, or the like.

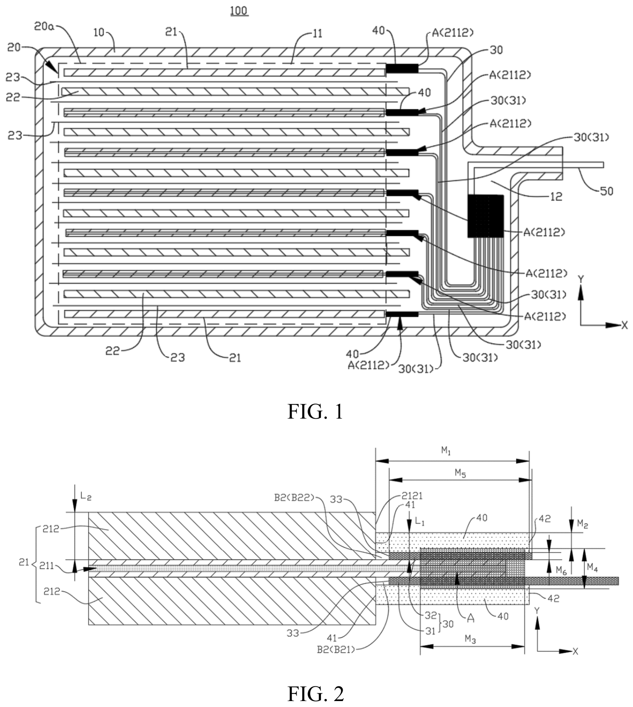

As shown in FIG. 1 and FIG. 2, a battery cell 100 includes a housing 10, an electrode assembly 20, a conductive member 30, and a protective layer 40. The electrode assembly 20 is accommodated in the housing 10. The electrode assembly 20 includes a first electrode plate 21 and a second electrode plate 22 with opposite polarities. The first electrode plate 21 includes a first current collector 211 and a first active substance layer 212. The first current collector 211 includes a main body portion 2111 and a first region 2112 located in a width direction X of the first electrode plate, the first active substance layer 212 being provided on a surface of the main body portion 2111 and the first active substance layer 212 being not provided on a surface of the first region 2112. The conductive member 30 is welded to the first region 2112 to form a welding region A. The protective layer 40 is disposed on a surface of the welding region A.

With the protective layer 40 disposed on the surface of the welding region A, the protective layer 40 can cover burrs, shavings, and the like in the welding region A to reduce the risk of short circuit inside the battery cell 100 caused by the burrs, shavings, and the like in the welding region A piercing a separator 23 of the electrode assembly 20, thereby improving safety performance of the battery cell 100.

An accommodating space is formed inside the housing 10. The electrode assembly 20, the protective layer 40, and the conductive member 30 are all accommodated in the accommodating space.

The housing 10 may be a hard shell, for example, a steel shell or an aluminum shell, so as to form a hard-shell battery cell 100. During discharging of the hard-shell battery cell 100, the housing 10 has small swelling. The housing 10 may alternatively be a soft shell, for example, the housing 10 may be an aluminum-plastic film, so as to form a pouch battery cell 100. The hard shell and the soft shell differ at least in their ability to resist deformation, and the hard shell has a stronger ability to resist deformation than the soft shell. In an embodiment in which the housing 10 is a soft shell, the housing 10 may also be referred to as a packaging bag, and the accommodating space is made into an enclosed space through a packaging process to seal the electrode assembly 20 in the accommodating space. The packaging process of the packaging bag includes but is not limited to melting, welding, and sealing member arrangement. The housing 10 may further accommodate other components such as an electrolyte.

For the pouch battery cell 100, a first accommodating space 11 and a second accommodating space 12 are formed inside the housing 10. In a thickness direction (the direction Y shown in FIG. 1) of the battery cell 100, size of the first accommodating space 11 is larger than size of the second accommodating space 12. The first accommodating space 11 is used to accommodate an active body 20a of the electrode assembly 20, at least a portion of the conductive member 30 extends into the second accommodating space 12 and is electrically connected to a first electrode lead 50 in the second accommodating space 12, and the first electrode lead 50 extends out of the housing 10 from the second space.

The electrode assembly 20 includes a first electrode plate 21, a second electrode plate 22, and a separator 23, where the first electrode plate 21, the second electrode plate 22, and the separator 23 are stacked. The separator 23 is configured to insulate and isolate the first electrode plate 21 from the second electrode plate 22. The electrode assembly 20 may be a laminated electrode assembly 20 or a wound electrode assembly 20.

Referring to FIG. 1, FIG. 2, and FIG. 3, the first electrode plate 21 includes a first current collector 211 and a first active substance layer 212, and in the thickness direction Y of the first electrode plate, at least one surface of the first current collector 211 is coated with the first active substance layer 212. In the width direction X of the first electrode plate, the first current collector 211 includes a main body portion 2111 and a first region 2112 connected to each other. The first active substance layer 212 is applied onto a surface of the main body portion 2111 in the thickness direction Y of the first electrode plate, and the first active substance layer 212 is not applied onto the first region 2112, meaning that the first region 2112 is an uncoated portion of the first electrode plate 21, which can be understood as the first region 2112 forming a first tab of the first electrode plate 21. In an embodiment in which the electrode assembly 20 is a wound electrode assembly 20, in a winding direction of the first electrode plate 21, the first current collector 211 may include a plurality of first regions 2112 arranged at a spacing of B1, that is, the first electrode plate 21 includes a plurality of first tabs arranged at a spacing of B1 in the winding direction of the first electrode plate 21. All of the first regions 2112 are stacked in a direction perpendicular to a winding axis of the electrode assembly 20, so as to prevent fusing when a large current passes through.

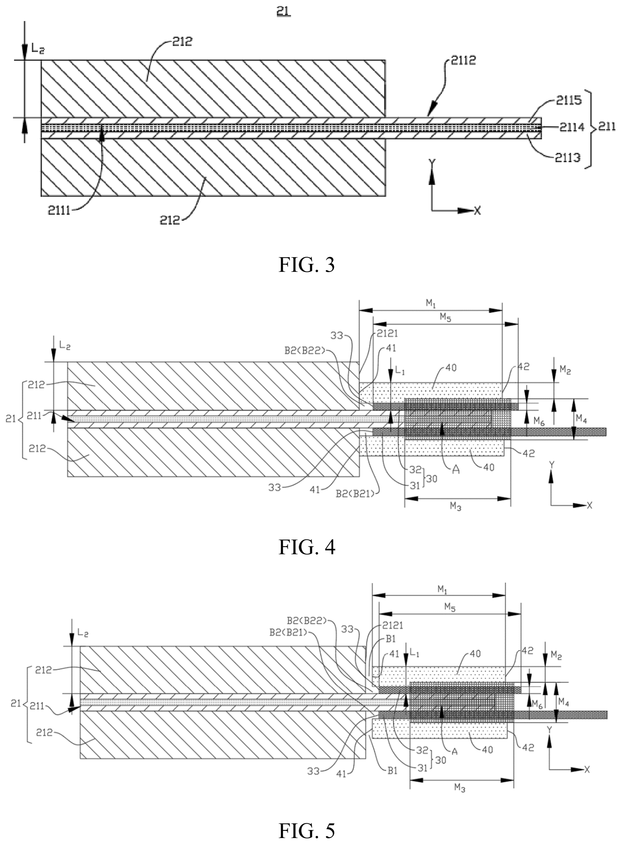

As shown in FIG. 2 and FIG. 3, in some embodiments, the first current collector 211 includes a first conductive layer 2113, an insulation layer 2114, and a second conductive layer 2115, and in the thickness direction Y of the first electrode plate, the insulation layer 2114 is located between the first conductive layer 2113 and the second conductive layer 2115. The first conductive layer 2113, the insulation layer 2114, and the second conductive layer 2115 jointly form a composite current collector. The first current collector 211 being a composite current collector allows the first current collector 211 to have better strength and is conducive to reducing weight of the first current collector 211.

Based on different polarities of the first electrode plate 21, the first conductive layer 2113 and the second conductive layer 2115 may be made of different materials. For example, if the first electrode plate 21 is a positive electrode plate, the first conductive layer 2113 and the second conductive layer 2115 may be made of aluminum. If the first electrode plate 21 is a negative electrode plate, the first conductive layer 2113 and the second conductive layer 2115 may be made of copper. The insulation layer 2114 insulates and isolates the first conductive layer 2113 from the second conductive layer 2115. The insulation layer 2114 may be made of PP (Polypropylene, polypropylene), PET (Polyethylene terephthalate, polyethylene terephthalate), or the like. The insulation layer 2114 may alternatively be made of another polymer material.

A portion of the first conductive layer 2113 in the width direction X of the first electrode plate, a portion of the insulation layer 2114 in the width direction X of the first electrode plate, and a portion of the second conductive layer 2115 in the width direction X of the first electrode plate jointly form the main body portion 2111 of the first current collector 211. In an embodiment in which in the thickness direction Y of the first electrode plate, one surface of the first current collector 211 is coated with the first active substance layer 212, in the thickness direction Y of the first electrode plate, a surface of the first conductive layer 2113 back away from the insulation layer 2114 is coated with the first active substance layer 212 or a surface of the second conductive layer 2115 back away from the insulation layer 2114 is coated with the first active substance layer 212. In an embodiment in which in the thickness direction Y of the first electrode plate, both surfaces of the first current collector 211 are coated with the first active substance layer 212, in the thickness direction Y of the first electrode plate, a surface of the first conductive layer 2113 back away from the insulation layer 2114 is coated with the first active substance layer 212 and a surface of the second conductive layer 2115 back away from the insulation layer 2114 is coated with the first active substance layer 212.

The other portion of the first conductive layer 2113 in the width direction X of the first electrode plate, the other portion of the insulation layer 2114 in the width direction X of the first electrode plate, and the other portion of the second conductive layer 2115 in the width direction X of the first electrode plate jointly form the first region 2112 of the first current collector 211. After the first region 2112 is welded to the conductive member 30, the first conductive layer 2113 is electrically connected to the second conductive layer 2115.

As shown in FIG. 2, in some embodiments, the conductive member 30 includes a first conductive sub-member 31 and a second conductive sub-member 32, where the first conductive sub-member 31 is welded to the first conductive layer 2113, and the second conductive sub-member 32 is welded to the second conductive layer 2115.

The conductive member 30 consists of two conductive sub-members 30. The first conductive sub-member 31 is disposed on a side of the first conductive layer 2113 back away from the insulation layer 2114 and is welded to the first conductive sub-member 31. The second conductive sub-member 32 is disposed on a side of the second conductive layer 2115 back away from the insulation layer 2114 and is welded to the second conductive sub-member 32. After the first conductive sub-member 31 is welded to the first conductive layer 2113 and the second conductive sub-member 32 is welded to the second conductive layer 2115, the first conductive layer 2113 is electrically connected to the second conductive layer 2115. Therefore, the first conductive sub-member 31 being welded to the first conductive layer 2113 and the second conductive sub-member 32 being welded to the second conductive layer 2115 is conducive to implementing electrical connection between the first conductive layer 2113 and the second conductive layer 2115, thereby improving current flow capacity.

As shown in FIG. 1 and FIG. 2, in some embodiments, length of the first conductive sub-member 31 is greater than length of the second conductive sub-member 32, and the battery cell 100 further includes a first electrode lead 50, the first electrode lead 50 having one end connected to the first conductive sub-member 31 and the other end extending out of the housing 10.

As shown in FIG. 2, in the width direction X of the first electrode plate, an end of the first conductive sub-member 31 close to the first active substance layer 212 is flush with an end of the second conductive sub-member 32 close to the first active substance layer 212. An end of the first conductive sub-member 31 far away from the first active substance layer 212 extends beyond an end of the second conductive sub-member 32 far away from the first active substance layer 212.

In some embodiments, in the width direction X of the first electrode plate, size of the second conductive sub-member 32 is M₅, where 3 mm ≤ M₅ ≤ 4.5 mm. If M₅ < 3 mm, the second conductive sub-member 32 has a small size and weak current flow capacity. If M₅ > 4.5 mm, the second conductive sub-member 32 has an excessively large size and occupies a large space, decreasing energy density of the battery cell 100. Therefore, when 3 mm ≤ M₅ ≤ 4.5 mm, the second conductive sub-member 32 has good current flow capacity, and the influence of the second conductive sub-member 32 on the energy density of the battery cell 100 can be reduced.

Optionally, M₅ may be 3 mm, 3.2 mm, 3.3 mm, 3.5 mm, 3.7 mm, 4 mm, 4.3 mm, 4.5 mm, or the like.

In some embodiments, in the thickness direction Y of the first electrode plate, size of the second conductive sub-member 32 is M₆, where 8 µm ≤ M₆ ≤ 20 µm.

M₆ is a distance between two opposite surfaces of the second conductive sub-member 32 in the thickness direction Y of the first electrode plate.

If M₆ < 8 µm, the second conductive sub-member has a small size and weak current flow capacity. If M₆ > 20 µm, the second conductive sub-member 32 has an excessively large size and occupies a large space, decreasing the energy density of the battery cell. Therefore, when 8 µm ≤ M₆ ≤ 20 µm, the second conductive sub-member 32 has good current flow capacity, and the influence of the second conductive sub-member 32 on the energy density of the battery cell 100 can be reduced.

Optionally, M₆ may be 8 µm, 10 µm, 12 µm, 14 µm, 16 µm, 18 µm, 20 µm, or the like. As shown in FIG. 1, the first electrode plate 21 includes a plurality of first regions 2112. After the first electrode plate 21 is made into the electrode assembly 20, the plurality of first regions 2112 are stacked in a direction. For the conductive member 30 corresponding to each first region 2112, the first conductive sub-member 31 extends beyond the second conductive sub-member 32, and the first conductive sub-members 31 are stacked and electrically connected to the first electrode lead 50. The second conductive sub-member 32 may be electrically connected to the first electrode lead 50 through welding, conductive adhesive, or the like. Only the first conductive sub-member 31 being connected to the first electrode lead 50 has smaller connection difficulty, as compared to both the first conductive sub-member 31 and the second conductive sub-member 32 being connected to the first electrode lead 50.

In some other embodiments, the conductive member 30 may alternatively include a portion, for example, including only the first conductive sub-member 31.

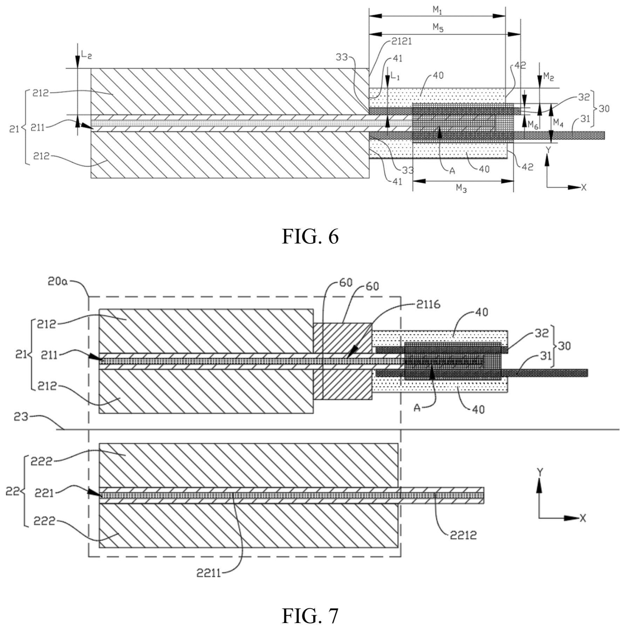

The second electrode plate 22 includes a second current collector 221 (shown in FIG. 7 to FIG. 13) and a second active substance layer 222 (shown in FIG. 7 to FIG. 13), and in a thickness direction of the second electrode plate 22, at least one surface of the second current collector 221 is coated with the second active substance layer 222. In a width direction of the second electrode plate 22, the second current collector 221 includes a body portion 2211 and a second region 2212 connected to each other. The second active substance layer 222 is applied onto a surface of the body portion 2211 in the thickness direction of the second electrode plate 22, and the second active substance layer 222 is not applied onto the second region 2212, meaning that the second region 2212 is an uncoated portion of the second electrode plate 22, which can be understood as the second region 2212 forming a second tab of the second electrode plate 22. In an embodiment in which the electrode assembly 20 is a wound electrode assembly 20, in a winding direction of the second electrode plate 22, the second current collector 221 may include a plurality of second regions 2212 arranged at a spacing of B1, that is, the second electrode plate 22 includes a plurality of second tabs arranged at a spacing of B1 in the winding direction of the second electrode plate 22. All of the second regions 2212 are stacked in a direction perpendicular to a winding axis of the electrode assembly 20, so as to prevent fusing when a large current passes through. The body portion 2211 and the second region 2212 may be integrally formed, or may be disposed separately and then connected through adhesion, welding, or the like to form the second current collector 221.

In some embodiments, the second current collector 221 includes a third conductive layer (not shown in the figure), an insulation portion (not shown in the figure), and a second conductive layer 2115 (not shown in the figure), and in the thickness direction of the second electrode plate 22, the insulation portion is located between the third conductive layer and the fourth conductive layer. The third conductive layer, the insulation portion, and the fourth conductive layer jointly form a composite current collector. The second current collector 221 being a composite current collector allows the second current collector 221 to have better strength and is conducive to reducing weight of the second current collector 221. For the structure of the second electrode plate 22, reference may be made to the structure of the first electrode plate 21.

Based on different polarities of the second electrode plate 22, the third conductive layer and the fourth conductive layer may be made of different materials. For example, if the second electrode plate 22 is a positive electrode plate, the third conductive layer and the fourth conductive layer may be made of aluminum. For example, if the second electrode plate 22 is a negative electrode plate, the third conductive layer and the fourth conductive layer may be made of copper. The insulation portion insulates and isolates the third conductive layer from the fourth conductive layer. The insulation portion may be made of PP (Polypropylene, polypropylene), PET (Polyethylene terephthalate, polyethylene terephthalate), or the like. The insulation portion may alternatively be made of another polymer material.

A portion of the third conductive layer in the width direction of the second electrode plate 22, a portion of the insulation portion in the width direction of the second electrode plate 22, and a portion of the fourth conductive layer in the width direction of the second electrode plate 22 jointly form the body portion 2211 of the second current collector 221. In an embodiment in which in the thickness direction of the second electrode plate 22, one surface of the second current collector 221 is coated with the second active substance layer 222, in the thickness direction of the second electrode plate, a surface of the third conductive layer back away from the insulation layer 2114 is coated with the second active substance layer 222 or a surface of the fourth conductive layer back away from the insulation layer 2114 is coated with the second active substance layer 222. In an embodiment in which in the thickness direction of the second electrode plate 22, both surfaces of the second current collector 221 are coated with the second active substance layer 222, in the thickness direction of the second electrode plate 22, a surface of the third conductive layer back away from the insulation layer 2114 is coated with the second active substance layer 222 and a surface of the fourth conductive layer back away from the insulation layer 2114 is coated with the second active substance layer 222.

The other portion of the third conductive layer in the width direction of the second electrode plate 22, the other portion of the insulation portion in the width direction of the second electrode plate 22, and the other portion of the fourth conductive layer in the width direction of the second electrode plate 22 jointly form the second region 2212 of the second current collector 221. The second region 2212 may also be welded to another conductive member 30 to lead out an electrode. After the second region 2212 is welded to another conductive member 30, the third conductive layer is electrically connected to the fourth conductive layer.

The first active substance layer 212 and main body portion 2111 of the first electrode plate 21, the second active substance layer 222 and body portion 2211 of the second electrode plate 22, and the separator 23 form the active body 20a of the electrode assembly 20.

The first electrode plate 21 and the second electrode plate 22 have opposite polarities, meaning that the first electrode plate 21 is a positive electrode plate and the second electrode plate 22 is a negative electrode plate, or the first electrode plate 21 is a negative electrode plate and the second electrode plate 22 is a positive electrode plate. The battery cell 100 mainly relies on migration of metal ions between the first electrode plate 21 and the second electrode plate 22 to work.

A lithium-ion battery is used as an example. For the positive electrode plate, the positive electrode active substance layer may be lithium cobalt oxide, lithium iron phosphate, ternary lithium, lithium manganate oxide, or the like. For the negative electrode plate, the negative electrode active substance layer may be carbon, silicon, or the like. The separator 23 may be made of PP (polypropylene, polypropylene), PE (polyethylene, polyethylene), or the like. The production processes of the battery cell 100 are conventional processes, including: preparing the positive and negative electrode plates and separator, winding or stacking the positive and negative electrode plates and separator to form the electrode assembly 20, and performing packaging, electrolyte injection, formation, capacity and voltage monitoring, and the like.

The first regions 2112 and the conductive members 30 may be in one-to-one correspondence in quantity, with each first region 2112 welded to one conductive member 30 to lead out an electrode of the electrode assembly 20. For example, if the first electrode plate 21 is a positive electrode plate, the conductive member 30 leads out the positive electrode of the electrode assembly 20; and if the first electrode plate 21 is a negative electrode plate, the conductive member 30 leads out the negative electrode of the electrode assembly 20.

The protective layer 40 may be disposed on the surface of the welding region A through coating, adhesion, welding, or the like. The protective layer 40 may be disposed on only a portion of the surface of the welding region A. For example, two surfaces of the welding region A in the thickness direction Y of the first electrode plate are provided with the protective layer 40. For another example, the entire peripheral surface of the welding region A is provided with the protective layer 40, where the peripheral surface of the welding region A is a surface of the welding region A extending around an axis parallel to the width direction X of the first electrode plate. The protective layer 40 may alternatively be disposed on the entire surface of the welding region A. FIG. 2 shows the case that in the thickness direction Y of the first electrode plate, two opposite surfaces of the welding region A are both provided with the protective layer 40.

In some embodiments, the protective layer 40 is made of an insulation material.

For example, the protective layer 40 is a ceramic layer, a rubber layer, or the like.

The protective layer 40 being made of an insulation material not only can reduce the risk of short circuit inside the battery cell 100 caused by the burrs, shavings, and the like in the welding region A piercing the separator 23 of the electrode assembly 20, but also can insulate and isolate the first electrode plate 21 from the second electrode plate 22, further reducing the risk of short circuit inside the battery cell 100, thereby improving the safety performance of the battery cell 100.

In some other embodiments, the protective layer 40 may alternatively be made of a conductive material or a semiconductor material. In this way, the protective layer 40 not only can reduce the risk of the burrs, shavings, and the like in the welding region A piercing the separator 23, but also can participate in current flow, which is conducive to improving the current flow capacity.

In some embodiments, the protective layer 40 is an adhesive layer.

The adhesive layer is made of one or more of acrylic acid, hot-melt adhesive, rubber, polypropylene, polyethylene terephthalate, polyimide, and fiber ester metal-based adhesive film. Materials such as acrylic acid, hot-melt adhesive, rubber, polypropylene, polyethylene terephthalate, polyimide, and fiber ester metal-based adhesive film enable the adhesive layer to have good adhesion, allowing it to be stably adhered to the welding region. The adhesive layer may be formed by solidifying glue applied onto the welding region A, where the glue includes but is not limited to acrylic acid, hot-melt adhesive, rubber, and aqueous-phase glue. The adhesive layer may alternatively be formed by adhering a solid adhesive paper to the welding region A, where the adhesive paper includes but is not limited to PP, PET, PI (Polyimide, polyimide), and metal-based adhesive film. In some embodiments, the protective layer 40 may be made of a transparent material.

In some embodiments, in the width direction X of the first electrode plate, size of the protective layer 40 is M₁, where 0.5 mm ≤ M₁ ≤ 6 mm.

M₁ is a distance between an end (second end 41) of the protective layer 40 closest to the first active substance layer 212 and an end (third end 42) of the protective layer 40 farthest away from the first active substance layer 212 in the width direction X of the first electrode plate.

For example, M₁ may be 0.5 mm, 0.8 mm, 1 mm, 1.5 mm, 2 mm, 2.5 mm, 3 mm, 3.5 mm, 4 mm, 4.5 mm, 5 mm, 5.5 mm, 6 mm, or the like.

In some embodiments, observed along the thickness direction Y of the first electrode plate, size of a portion of the protective layer 40 overlapping with the welding region A in the thickness direction Y of the first electrode plate is M₂, where 3 µm ≤ M₂ ≤ 60 µm.

If M₂ < 3 µm, the protective layer 40 has a small thickness, and the protective layer 40 is at a high risk of being pierced by the burrs, shavings, and the like in the welding region A. If M₂ > 60 µm, the protective layer 40 has an excessively large thickness and occupies a large space, which may decrease the energy density of the battery cell 100. Therefore, when 3 µm ≤ M₂ ≤ 60 µm, the protective layer has a large size in the thickness direction Y of the first electrode plate and is less likely to be pierced by the burrs, shavings, and the like in the welding region A, thereby reducing the risk of being pierced by the burrs, shavings, and the like in the welding region A, and reducing the influence of the protective layer 40 on the energy density of the battery cell 100.

For example, M₂ may be 3 µm, 10 µm, 15 µm, 20 µm, 25 µm, 30 µm, 35 µm, 40 µm, 45 µm, 50 µm, 55 µm, 60 µm, or the like.

Optionally, 4 µm ≤ M₂ ≤ 40 µm, for example, M₂ is 4 µm, 5 µm, 8 µm, 10 µm, 15 µm, 20 µm, 25 µm, 30 µm, 35 µm, 40 µm, or the like.

The protective layer 40 is an adhesive layer, so that the protective layer 40 can be provided on the surface of the welding region A through adhesion or coating. The provision manner is simple and convenient.

In some embodiments, in the width direction X of the first electrode plate, size of the welding region A is M₃, where 1.8 mm ≤ M₃ ≤ 2.3 mm.

If M₃ < 1.8 mm, the welding region A is small, and welding strength between the conductive member 30 and the first region 2112 is insufficient. If M₃ > 2.3 mm, the welding region is large, which increases welding difficulty and may reduce quality of the first electrode plate. Therefore, when 1.8 mm ≤ M₃ ≤ 2.3 mm, a good welding strength is implemented between the first region 2112 and the conductive member 30, and the risk of reducing quality of the first electrode plate 21 due to welding can be reduced.

M₃ is a distance between an end of the welding region A closest to the first active substance layer 212 in the width direction X of the first electrode plate and an end of the welding region A farthest away from the first active substance layer 212 in the width direction X of the first electrode plate.

For example, M₃ may be 1.8 mm, 1.9 mm, 2.0 mm, 2.1 mm, 2.2 mm, 2.3 mm, or the like.

In some embodiments, in the thickness direction of the first electrode plate, size of the welding region A is M₄, where 40 µm ≤ M₄ ≤ 45 µm.

M₄ is a distance between two opposite surfaces of the welding region A in the thickness direction Y of the first electrode plate.

If M₄ < 40 µm, the welding region is small, and welding strength between the conductive member and the first region is insufficient. If M₄ > 45 µm, the welding region is large, which increases welding difficulty and may reduce quality of the first electrode plate. Therefore, when 40 µm ≤ M₄ ≤ 45 µm, a good welding strength is implemented between the first region and the conductive member, and the risk of reducing quality of the first electrode plate due to welding can be reduced.

For example, M₄ may be 40 µm, 41 µm, 42 µm, 43 µm, 44 µm, 45 µm, or the like.

As shown in FIG. 2, in some embodiments, in the width direction X of the first electrode plate, an end of the first active substance layer 212 is in contact with an end of the protective layer 40.

With the end of the first active substance layer 212 in the width direction X of the first electrode plate in contact with the end of the protective layer 40 in the width direction X of the first electrode plate, the protective layer 40 can cover the burrs, shavings, and the like in the welding region A as many as possible to further reduce the risk of short circuit inside the battery cell 100 caused by the burrs, shavings, and the like in the welding region A piercing the separator 23 of the electrode assembly 20.

The first active substance layer 212 and the protective layer 40 are arranged side by side in the width direction X of the first electrode plate. In the width direction X of the first electrode plate, an end of the first active substance layer 212 closest to the protective layer 40 is in contact with an end of the protective layer 40 closest to the first active substance layer 212. The first active substance layer 212 and the protective layer 40 may be in abutment contact only or in abutment contact and connected as a whole. As shown in FIG. 2, in the width direction X of the first electrode plate, the end of the first active substance layer 212 closest to the protective layer 40 is a first end 2121, and the end of the protective layer 40 closest to the first active substance layer 212 is a second end 41, where the first end 2121 is in contact with the second end 41, which can be understood as a distance between the first end 2121 and the second end 41 being 0.

In some embodiments, observed along the thickness direction Y of the first electrode plate, the second end 41 may fall within a side of the welding region A close to the first active substance layer 212 in the width direction X of the first electrode plate, or the second end 41 is flush with an end of the welding region A close to the first active substance layer 212, so that the welding region A can be covered by the protective layer 40 as much as possible, further reducing the risk of short circuit inside the battery cell 100 caused by the burrs and shavings in the welding region A piercing the separator 23. FIG. 2 shows the case that observed along the thickness direction Y of the first electrode plate, a third end 42 is located on a side of the welding region A back away from the first active substance layer 212.

In the width direction X of the first electrode plate, the protective layer 40 has the third end 42 back away from the first active substance layer 212, where the third end 42 and the second end 41 are arranged opposite each other. In an embodiment in which in the width direction X of the first electrode plate, an end of the first active substance layer 212 is in contact with an end of the protective layer 40, observed along the thickness direction Y of the first electrode plate, the third end 42 may fall within a side of the welding region A back away from the first active substance layer 212 in the width direction X of the first electrode plate, or the third end 42 is flush with an end of the welding region A back away from the first active substance layer 212, so that in the width direction X of the first electrode plate, the protective layer 40 covers the entire welding region A, further reducing the risk of the burrs, shavings, and the like in the welding region A piercing the separator 23.

In some other embodiments, as shown in FIG. 4, observed along the thickness direction Y of the first electrode plate, the third end 42 may fall within the welding region A, reducing the size of the protective layer 40 in the width direction X of the first electrode plate.

As shown in FIG. 5, in some other embodiments, in the width direction X of the first electrode plate, an end of the first active substance layer 212 may alternatively be not in contact with an end of the protective layer 40, meaning that the first end 2121 is not in contact with the second end 41 and a spacing B1 is formed between the first end 2121 and the second end 41, reducing the risk of interference between the first active substance layer 212 and the protective layer 40.

As shown in FIG. 2, FIG. 4, and FIG. 5, in some embodiments, in the width direction X of the first electrode plate, a gap B2 is formed between an end of the first active substance layer 212 and an end of the conductive member 30.

The gap B2 being formed between the end of the first active substance layer 212 in the width direction X of the first electrode plate and the end of the conductive member 30 in the width direction X of the first electrode plate not only facilitates mounting of the conductive member 30, but also reduces the risk of damage to the first active substance layer 212 during mounting of the conductive member 30.

The first active substance layer 212 and the conductive member 30 are arranged side by side in the width direction X of the first electrode plate. In the width direction X of the first electrode plate, the gap B2 is formed between an end of the first active substance layer 212 closest to the conductive member 30 and an end of the conductive member 30 closest to the first active substance layer 212, meaning that the two ends are not in contact. In the width direction X of the first electrode plate, the end of the first active substance layer 212 closest to the conductive member 30 is also the end of the first active substance layer 212 closest to the protective layer 40, that is, the first end 2121. The end of the conductive member 30 closest to the first active substance layer 212 is a fourth end 33, where the first end 2121 is not in contact with the fourth end 33.

In an embodiment in which the conductive member 30 includes a first conductive sub-member 31 and a second conductive sub-member 32, in the width direction X of the first electrode plate, a first gap B21 is formed between an end of the first conductive sub-member 31 closest to the first active substance layer 212 and the first end 2121 of the first active substance layer 212, and a second gap B22 is formed between an end of the second conductive sub-member 32 closest to the first active substance layer 212 and the first end 2121 of the first active substance layer 212.

As shown in FIG. 6, in some other embodiments, in the width direction X of the first electrode plate, an end of the first active substance layer 212 may be in contact with an end of the conductive member 30. In other words, in the width direction X of the first electrode plate, the end of the first active substance layer 212 closest to the conductive member 30 is in contact with the end of the conductive member 30 closest to the first active substance layer 212. It can be understood that in the width direction X of the first electrode plate, the first end 2121 of the first active substance layer 212 is in contact with the fourth end 33 of the conductive member 30. The first active substance layer 212 and the conductive member 30 may be in abutment contact only or in abutment contact and connected as a whole.

In the width direction X of the first electrode plate, the end of the welding region A closest to the first active substance layer 212 may extend to the end of the conductive member 30 closest to the first active substance layer 212, meaning that the end of the welding region A closest to the first active substance layer 212 may extend to the fourth end 33 of the conductive member 30. In an embodiment in which a gap B2 is formed between an end of the first active substance layer 212 and an end of the conductive member 30, the end of the welding region A closest to the first active substance layer 212 may extend to the end of the conductive member 30 closest to the first active substance layer 212, and the gap B2 can alleviate damage to the first active substance layer 212 caused by temperature during welding of the conductive member 30 and the first region 2112.

Certainly, as shown in FIG. 2, FIG. 4, FIG. 5, and FIG. 6, in the width direction X of the first electrode plate, the end of the welding region A closest to the first active substance layer 212 may alternatively not extend to the end of the conductive member 30 closest to the first active substance layer 212, meaning that the end of the welding region A closest to the first active substance layer 212 may alternatively not extend to the fourth end 33 of the conductive member 30. It can be understood that in the width direction X of the first electrode plate, a distance between the end of the welding region A closest to the first active substance layer 212 and the end (first end 2121) of the first active substance layer 212 closest to the conductive member 30 is larger than a distance of the gap B2 formed between the end (fourth end 33) of the conductive member 30 closest to the first active substance layer 212 and the end (first end 2121) of the first active substance layer 212 closest to the conductive member 30. In this way, there is a distance between the welding region A and the first active substance layer 212 in the width direction X of the first electrode plate, reducing the risk of damage to the first active substance layer 212 caused by the high temperature during welding of the first region 2112 and the conductive member 30.

In an embodiment in which an end of the first active substance layer 212 is in contact with an end of the conductive member 30, an end of the welding region A may not extend to the first active substance layer 212, reducing the risk of damage to the first active substance layer 212 caused by the high temperature during welding. Certainly, the welding region A may alternatively extend to the first active substance layer 212, increasing the welding area and improving connection stability.

As shown in FIG. 2 and FIG. 4 to FIG. 6, in some embodiments, the protective layer 40 is disposed on a side of the first region 2112 in the thickness direction Y of the first electrode plate, and in the thickness direction Y of the first electrode plate, a surface of the protective layer 40 back away from the first region 2112 does not protrude from a surface of the first active substance layer 212 back away from the main body portion 2111.

In the thickness direction Y of the first electrode plate, with the surface of the protective layer 40 back away from the first region 2112 not protruding from the surface of the first active substance layer 212 back away from the main body portion 2111, the protective layer 40 can utilize a space formed by a thickness difference between the first active substance layer 212 and the first region 2112 in the thickness direction Y of the first electrode plate, without occupying additional space, avoiding decreasing the energy density of the battery cell 100 due to the protective layer 40 occupying a large space in the thickness direction Y of the first electrode plate.

In the thickness direction Y of the first electrode plate, a distance between the surface of the protective layer 40 back away from the first region 2112 and a surface of the first region 2112 facing the protective layer 40 is less than a distance between the surface of the first active substance layer 212 back away from the main body portion 2111 and a surface of the main body portion 2111 facing the first active substance layer 212, so that the surface of the protective layer 40 back away from the first region 2112 does not protrude from the surface of the first active substance layer 212 back away from the main body portion 2111. FIG. 2 and FIG. 4 to FIG. 6 show the case that the distance between the surface of the protective layer 40 back away from the first region 2112 and the surface of the first region 2112 facing the protective layer 40 is less than the distance between the surface of the first active substance layer 212 back away from the main body portion 2111 and the surface of the main body portion 2111 facing the first active substance layer 212, that is, L1 < L2 in the figures.

Alternatively, in some other embodiments, in the thickness direction Y of the first electrode plate, a distance between the surface of the protective layer 40 back away from the first region 2112 and a surface of the first region 2112 facing the protective layer 40 is equal to a distance between the surface of the first active substance layer 212 back away from the main body portion 2111 and a surface of the main body portion 2111 facing the first active substance layer 212, meaning that the surface of the protective layer 40 back away from the first region 2112 and the surface of the first active substance layer 212 back away from the main body portion 2111 are located in a same plane, that is, L1 = L2, so that the surface of the protective layer 40 back away from the first region 2112 does not protrude from the surface of the first active substance layer 212 back away from the main body portion 2111.

Certainly, in some other embodiments, in the thickness direction Y of the first electrode plate, a surface of the protective layer 40 back away from the first region 2112 may alternatively protrude from a surface of the first active substance layer 212 back away from the main body portion 2111.

As shown in FIG. 7, in some embodiments, the first electrode plate 21 is a positive electrode plate, and the second electrode plate 22 is a negative electrode plate. The second electrode plate 22 includes a second current collector 221 and a second active substance layer 222, the second active substance layer 222 is disposed on a surface of the second current collector 221, and observed along the thickness direction Y of the first electrode plate, the welding region A and the second active substance layer 222 do not have an overlapping region.

To implement that the welding region A and the second active substance layer 222 do not have an overlapping region, in the width direction X of the first electrode plate, a distance between the end of the first active substance layer 212 close to the conductive member 30 and the end of the conductive member 30 closest to the first active substance layer 212 is large, so that the first region 2112 forms a first uncoated region 2116 with a large distance between the first active substance layer 212 and the conductive member 30, and in turn the welding region A is located on an outer side of the second active substance layer 222 in the width direction X of the first electrode plate. The first uncoated region 2116 is not provided with the first active substance layer 212 and is disposed opposite the second active substance layer 222. A protective member 60 may be disposed in the first uncoated region 2116, so as to reduce the risk of short circuit inside the battery cell 100 caused by burrs in the first uncoated region 2116 piercing the separator 23.

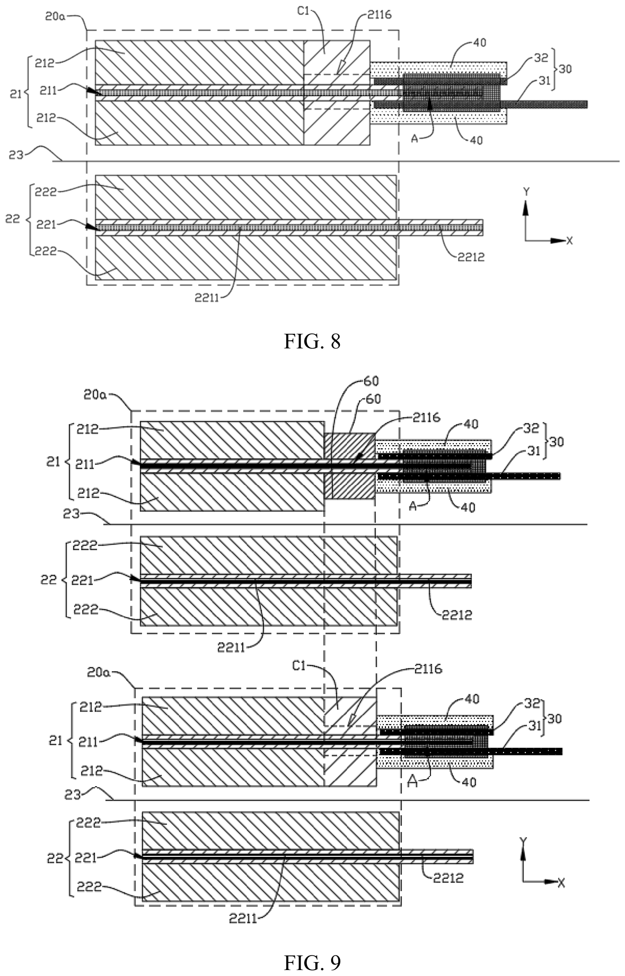

To fully utilize a space corresponding to the first uncoated region 2116, as shown in FIG. 8, in some embodiments, an active substance with the same property as the first active substance layer 212 may be disposed in the first uncoated region 2116, which increases the amount of active substance of the positive electrode plate. In this way, in a case that an external size of the battery cell 100 in the width direction X of the first electrode plate is substantially the same as an external size of a battery cell 100 with no active substance in the first uncoated region 2116 in the width direction X of the first electrode plate, increasing the amount of active substance of the positive electrode plate is conducive to increasing the energy density of the battery cell 100. The region indicated by the hollow arrow in FIG. 8 and FIG. 9 is the first uncoated region 2116 with no active substance disposed between the first active substance layer 212 and the conductive member 30 on the first current collector 211, and C1 in FIG. 8 is the active substance that is disposed in the first uncoated region 2116 and that has the same property as the first active substance layer 212. FIG. 9 is a comparison diagram of the two embodiments in FIG. 7 and FIG. 8, and two dashed lines connecting the upper and lower two figures in FIG. 9 are two end portions of the first uncoated region 2116 in the width direction X of the first electrode plate respectively.

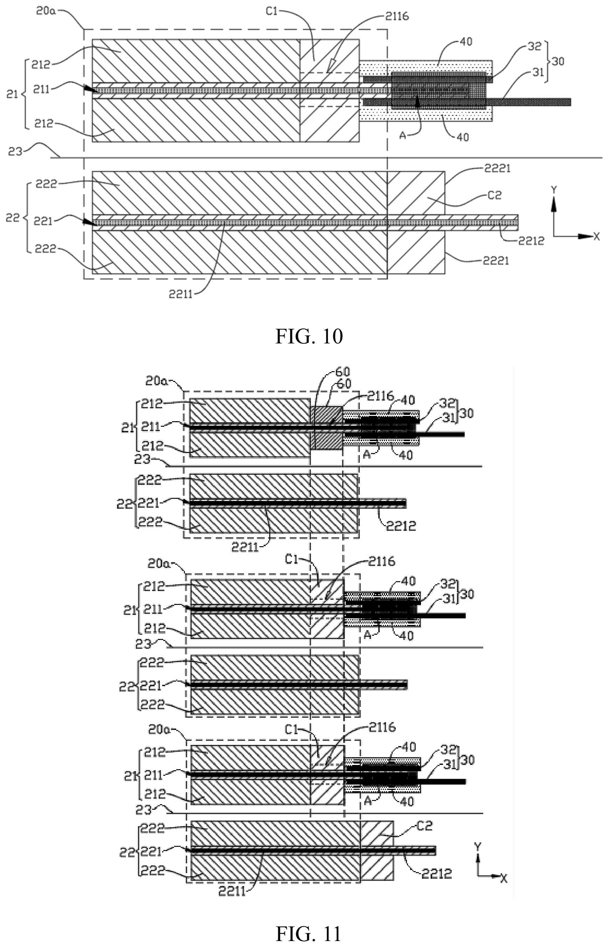

As shown in FIG. 10, in some other embodiments, the welding region A and the second active substance layer 222 of the second electrode plate 22 may have an overlapping region. Specifically, the first electrode plate 21 is a positive electrode plate, and the second electrode plate 22 is a negative electrode plate. The second electrode plate 22 includes a second current collector 221 and a second active substance layer 222, the second active substance layer 222 is disposed on a surface of the second current collector 221, and observed along the thickness direction Y of the first electrode plate, the welding region A and the second active substance layer 222 have an overlapping region.

As shown in FIG. 10 and FIG. 11, a distance between the end of the first active substance layer 212 close to the conductive member 30 and the end of the conductive member 30 closest to the first active substance layer 212 is large, so that the first region 2112 forms a first uncoated region 2116 with a large distance between the first active substance layer 212 and the conductive member 30, with a protective member 60 disposed in the first uncoated region 2116. In this case, the protective member 60 can be removed, the same active substance as the first active substance layer 212 can be disposed in the first uncoated region 2116, and two ends of the active substance in the first uncoated region 2116 can be in contact with the first active substance layer 212 and the conductive member 30 respectively, which increases the amount of active substance of the positive electrode plate, increasing the energy density of the battery cell 100 while maintaining an overall size of the battery cell 100 in the width direction X of the first electrode plate substantially unchanged. After the amount of active substance of the positive electrode plate is increased, to reduce the risk of lithium precipitation, size of the second active substance layer 222 of the second electrode plate 22 in the width direction X of the first electrode plate can be increased, which can be understood as increasing the amount of an active substance C2 with the same property as the second active substance layer 222 on an end of the second active substance layer 222. This is based on the fact that observed along the width direction X of the first electrode plate, the second active substance layer 222 and the welding region A have an overlapping region. The region indicated by the hollow arrow in FIG. 10 and FIG. 11 is the first uncoated region 2116 with no active substance disposed between the first active substance layer 212 and the conductive member 30 on the first current collector 211, C1 in FIG. 10 and FIG. 11 is the active substance that is disposed in the first uncoated region 2116 and that has the same property as the first active substance layer 212, and C2 in FIG. 10 and FIG. 11 is the active substance that is increased on the end of the second active substance layer 222 and that has the same property as the second active substance layer 222. FIG. 11 is a comparison diagram of the embodiments in FIG. 7, the embodiments in FIG. 8, and the embodiments in FIG. 10. Two dashed lines connecting the upper and lower three figures in FIG. 11 are two end portions of the first uncoated region 2116 in the width direction X of the first electrode plate respectively.

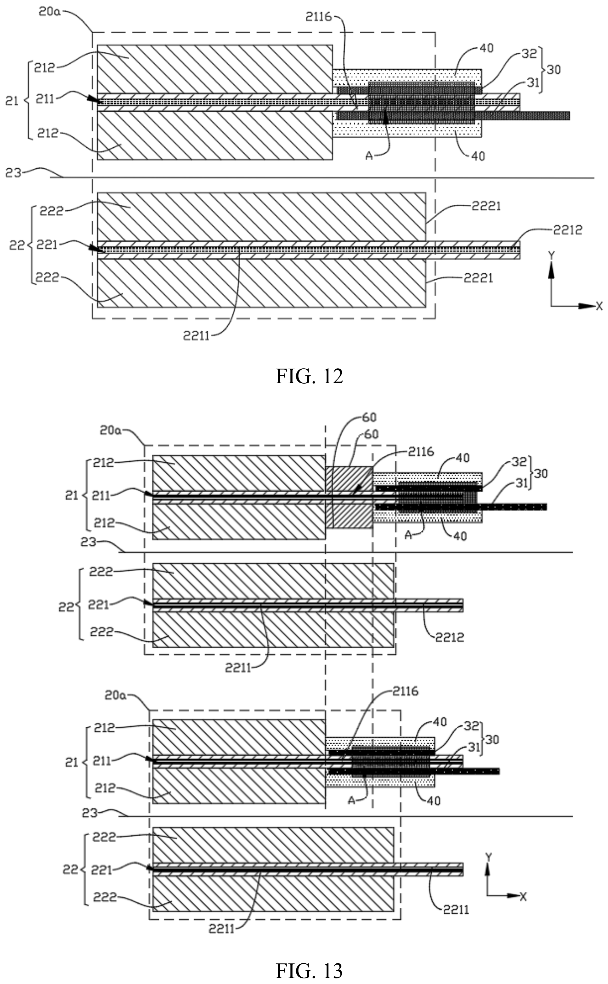

In some other embodiments, a distance between the welding region A and the first active substance layer 212 in the width direction X of the first electrode plate may be set to be small enough. For example, as shown in FIG. 12 and FIG. 13, a distance between the end of the first active substance layer 212 close to the conductive member 30 and the end of the conductive member 30 closest to the first active substance layer 212 is large, so that the first region 2112 forms a first uncoated region 2116 with a large distance between the first active substance layer 212 and the conductive member 30, with a protective member 60 disposed in the first uncoated region 2116. In this case, the protective member 60 can be removed, and the conductive member 30 and the welding region A can move toward the first active substance layer 212 along the width direction X of the first electrode plate, to decrease the distance between the conductive member 30 and the first active substance layer 212 or make the conductive member 30 in contact with the first active substance layer 212, so that the welding region A can overlap with the active body 20a of the electrode assembly 20. In this way, although the amounts of active substances of the first electrode plate 21 and the second electrode plate 22 remain unchanged, size of the housing 10 of the battery cell 100 in the width direction X of the first electrode plate can be reduced, thereby increasing the volumetric energy density of the battery cell 100. Therefore, as shown in FIG. 12, observed along the thickness direction Y of the first electrode plate, the welding region A and the second active substance layer 222 have an overlapping region, so that the welding region A can overlap with the active body 20a region of the electrode assembly 20, which can reduce the size of the battery cell 100 in the width direction X of the first electrode plate, thereby increasing the volumetric energy density of the battery cell 100. The region indicated by the hollow arrow in FIG. 12 and FIG. 13 is the first uncoated region 2116 with no active substance disposed between the first active substance layer 212 and the conductive member 30 on the first current collector 211. FIG. 13 is a comparison diagram of the embodiments in FIG. 7 and the embodiments in FIG. 12, and two dashed lines connecting the upper and lower two figures in FIG. 13 are two end portions of the first uncoated region 2116 in the width direction X of the first electrode plate respectively.

As shown in FIG. 12 and FIG. 13, the active substance region of the first electrode plate 21 is widened along the width direction X of the first electrode plate, as compared to the active substance region of the first electrode plate 21 in FIG. 7, and the position in which the protective member 60 is disposed in FIG. 7 is provided with the active substance. This makes full use of the internal space of the housing 10, allowing the internal space of the housing 10 of the fixed-volume battery cell 100 to be filled with more active substances without changing the external size of the battery cell 100 in the width direction X of the first electrode plate in FIG. 7, making it possible to increase the volumetric energy density of the battery cell 100 by 1% to 2%.

As shown in FIG. 10 and FIG. 12, in an embodiment in which observed along the thickness direction Y of the first electrode plate, the welding region A and the second active substance layer 222 have an overlapping region, in the width direction X of the first electrode plate, the second active substance layer 222 has a first edge 2221; and observed along the thickness direction Y of the first electrode plate, the first edge 2221 falls within the welding region A.

Observed along the thickness direction Y of the first electrode plate, the first edge 2221 falls within the welding region A, so that the second active substance layer 222 can cover the entire first active substance layer 212 corresponding to the second active substance layer 222, thereby reducing the risk of lithium precipitation. In addition, this can reduce use amount of the second active substance layer 222 as much as possible, and is conducive to reducing the material consumption and avoiding material waste, as compared to the case that the second active substance layer 222 covers the entire first active substance layer 212 in the width direction X of the first electrode plate and when observed along the thickness direction Y of the first electrode plate, the first edge 2221 is flush with an edge of the welding region A far away from the first active substance layer 212 or the first edge 2221 is located on a side, far away from the first active substance layer 212, of the edge of the welding region A far away from the first active substance layer 212.

It should be noted that in an embodiment in which the active substance C2 with the same property as the second active substance layer 222 is increased on the end of the second active substance layer 222, so that when observed along the thickness direction Y of the first electrode plate, the second active substance layer 222 overlaps with the welding region A, the first edge 2221 may be an edge of the increased active substance C2 back away from the first active substance layer 212 in the width direction X of the first electrode plate.

In some other embodiments, observed along the thickness direction Y of the first electrode plate, the first edge 2221 may alternatively fall within a side of the welding region A back away from the first active substance layer 212 in the width direction X of the first electrode plate. Alternatively, observed along the thickness direction Y of the first electrode plate, the first edge 2221 may be flush with the end of the welding region A back away from the first active substance layer 212 in the width direction X of the first electrode plate.

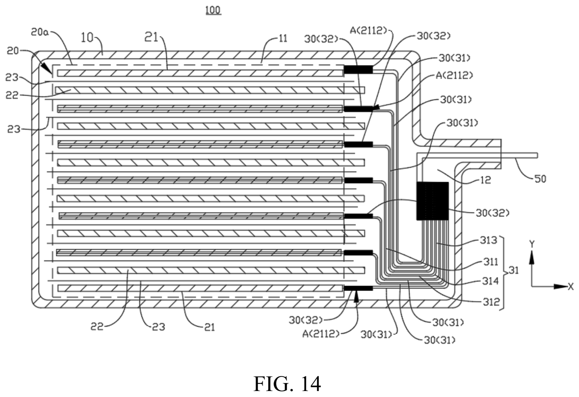

In an embodiment in which the conductive member 30 includes a first conductive sub-member 31 and a second conductive sub-member 32 and length of the first conductive sub-member 31 is greater than length of the second conductive sub-member 32, as shown in FIG. 14, the first conductive sub-member 31 includes a first segment 311, a second segment 312, and a third segment 313 connected in sequence, where the first segment 311 is welded to the first conductive layer 2113, the third segment 313 is connected to the first electrode lead 50, the third segment 313 is bent relative to the second segment 312 to form a bent portion 314 between the second segment 312 and the third segment 313, and the second conductive sub-member 32 overlaps with the first segment 311 and does not overlap with the bent portion 314.

In the width direction X of the first electrode plate, the size of the welding region A is the same as the size of the second conductive member 30. A portion of the first conductive sub-member 31 extending beyond the second conductive sub-member 32 is configured to be electrically connected to the first electrode lead 50.

In an embodiment in which the electrode assembly 20 includes a plurality of first regions 2112, a plurality of conductive members 30 are provided correspondingly. In at least some of the plurality of conductive members 30, the first segment 311 and third segment 313 of the first conductive sub-member 31 are arranged opposite each other at a spacing of B1 in the width direction X of the first electrode plate. In the width direction X of the first electrode plate, the first end 2121 and the third segment 313 are located on two sides of the second segment 312 respectively. In some of the first conductive sub-members 31, the third segment 313 is bent relative to the second segment 312 to form the bent portion 314, and the first segment 311 is also bent relative to the second segment 312 to form the bent portion 314. In some of the first conductive sub-members 31, only the third segment 313 is bent relative to the second segment 312 to form the bent portion 314, and the first segment 311 and the second segment 312 are located in a same plane, which can be understood as the first segment 311 being not bent relative to the second segment 312.

The third segment 313 being bent relative to the second segment 312 can reduce a size of the first conductive sub-member 31 extending along the width direction X of the first electrode plate, and in turn can reduce the overall size of the battery cell 100 in the width direction X of the first electrode plate. This is conducive to increasing the volumetric energy density of the battery cell 100 and facilitating miniaturization of the structure of the battery cell 100.

The second conductive sub-member 32 overlaps with the first segment 311 and does not overlap with the bent portion 314, so that the second conductive sub-member 32 is not bent at a position corresponding to the bent portion 314. This reduces bending difficulty of the first conductive sub-member 31 and allows it to be bent to a great extent, thereby reducing the size of the battery cell 100 in the width direction X of the first electrode plate and helping to increase the energy density of the battery cell 100. Because the second conductive sub-member 32 is not bent, the third segment 313 being bent relative to the second segment 312 is more conducive to improving packaging reliability of the housing 10.

In some embodiments, the battery cell 100 is a pouch battery cell 100, and the housing 10 is a packaging bag. The pouch battery cell 100 has advantages such as good safety performance, light weight, and low internal resistance, reducing self-consumption of the battery cell 100.

An embodiment of this application further provides an electric device. The electric device includes the battery cell 100 according to any of the foregoing embodiments.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, comprising an electrode assembly and a conductive member, wherein the electrode assembly comprises a first electrode plate and a second electrode plate with opposite polarities, the first electrode plate comprises a first current collector and a first active substance layer, and the first current collector comprises a first conductive layer, an insulation layer, and a second conductive layer, wherein in a width direction of the first electrode plate, the first current collector comprises a main body portion and a first region, the first active substance layer being provided on a surface of the main body portion and the first active substance layer being not provided on a surface of the first region;
the conductive member is disposed on both the first conductive layer and the second conductive layer, and is welded to the first region to form a welding region for mutual conductive connection; and
the battery cell further comprises a protective layer, wherein the protective layer is disposed on a surface of the welding region.

2. The battery cell according to claim 1, wherein the protective layer is an insulation adhesive layer.

3. The battery cell according to claim 2, wherein the adhesive layer is made of one or more of acrylic acid, hot-melt adhesive, rubber, polypropylene, polyethylene terephthalate, polyimide, and fiber ester metal-based adhesive film.

4. The battery cell according to claim 1, wherein in the width direction of the first electrode plate, size of the protective layer is M₁, wherein 0.5 mm ≤ M₁ ≤ 6 mm.

5. The battery cell according to claim 1, wherein observed along a thickness direction of the first electrode plate, size of a portion of the protective layer overlapping with the welding region in the thickness direction of the first electrode plate is M₂, wherein 3 µm ≤ M₂ ≤ 60 µm.

6. The battery cell according to claim 1, wherein in the width direction of the first electrode plate, size of the welding region is M₃, wherein 1.8 mm ≤ M₃ ≤ 2.3 mm.

7. The battery cell according to claim 1, wherein in a thickness direction of the first electrode plate, size of the welding region is M₄, wherein 40 µm ≤ M₄ ≤ 45 µm.

8. The battery cell according to claim 1, wherein in the width direction of the first electrode plate, an end of the first active substance layer is in contact with an end of the protective layer.

9. The battery cell according to claim 1, wherein in the width direction of the first electrode plate, a gap is formed between an end of the first active substance layer and an end of the conductive member.

10. The battery cell according to claim 1, wherein the protective layer is disposed on a side of the first region in a thickness direction of the first electrode plate, and in the thickness direction of the first electrode plate, a surface of the protective layer back away from the first region does not protrude from a surface of the first active substance layer back away from the main body portion.

11. The battery cell according to any one of claims 1 to 10, wherein the first electrode plate is a positive electrode plate, and the second electrode plate is a negative electrode plate; wherein
the second electrode plate comprises a second current collector and a second active substance layer, the second active substance layer is disposed on a surface of the second current collector, and observed along a thickness direction of the first electrode plate, the welding region and the second active substance layer have an overlapping region.

12. The battery cell according to claim 11, wherein in the width direction of the first electrode plate, the second active substance layer has a first edge; and observed along the thickness direction of the first electrode plate, the first edge falls within the welding region.

13. The battery cell according to any one of claims 1 to 10, wherein in a thickness direction of the first electrode plate, the insulation layer is located between the first conductive layer and the second conductive layer; and
the conductive member comprises a first conductive sub-member and a second conductive sub-member, wherein the first conductive sub-member is welded to the first conductive layer, and the second conductive sub-member is welded to the second conductive layer.

14. The battery cell according to claim 13, wherein the battery cell further comprises a housing, the electrode assembly being accommodated in the housing; and
length of the first conductive sub-member is greater than length of the second conductive sub-member, and the battery cell further comprises a first electrode lead, the first electrode lead having one end connected to the first conductive sub-member and the other end extending out of the housing.

15. The battery cell according to claim 14, wherein the first conductive sub-member comprises a first segment, a second segment, and a third segment connected in sequence, wherein the first segment is welded to the first conductive layer, the third segment is connected to the first electrode lead, the third segment is bent relative to the second segment to form a bent portion between the second segment and the third segment, and the second conductive sub-member overlaps with the first segment and does not overlap with the bent portion.

16. The battery cell according to claim 15, wherein in the width direction of the first electrode plate, size of the second conductive sub-member is M₅, wherein 3 mm ≤ M₅ ≤ 4.5 mm.

17. The battery cell according to claim 16, wherein in the thickness direction of the first electrode plate, size of the second conductive sub-member is M₆, wherein 8 µm ≤ M₆ ≤ 20 µm.

18. An electric device, comprising the battery cell according to any one of claims 1 to 17.
